# FASCICULE DE BREVET EUROPEEN

(11) **EP 2 110 487 B1**
(45) Date de publication et mention de la délivrance du brevet: **20.05.2015**
(21) Numéro de dépôt: 08007271.3
(22) Date de dépôt: 14.04.2008
(51) Int. Cl.: E04B 7/22

(54) **Elément de construction et méthode de fabrication d'éléments de construction**
Bauteil und Herstellungsmethode von Bauteilen
Construction element and method of manufacturing construction elements

(43) Date de publication de la demande: 21.10.2009
(73) Titulaire: Unilin BVBA, 8710 Wielsbeke (BE)
(72) Inventeur: Malfait, Lieven, 9800 Deinze (BE)
(74) Mandataire: Donné, Eddy

(56) Documents cités:
- EP-A- 0 450 731
- DE-U- 29 822 820

## Description

La présente invention concerne des éléments de construction ou des panneaux de construction, ainsi qu'un procédé pour la fabrication d'éléments de construction.

Plus spécifiquement, l'invention concerne des éléments de construction ou des panneaux de construction qui peuvent être utilisés comme éléments de toitures, comme éléments de murs ou comme éléments de sols, ces éléments de construction comprenant au moins une plaque de base, ladite plaque de base étant munie de nervures, une matière isolante étant disposée entre lesdites nervures.

Des éléments de construction ou des panneaux de construction de ce type sont déjà bien connus en soi et peuvent par exemple être réalisés sous la forme d'un élément de toiture isolant de type autoportant. On se réfère à cet égard, à titre d'exemple, au document EP 0 450 731. Des éléments de toitures de ce type peuvent être appliqués avec leurs plaques de base sur une charpente, par exemple une charpente constituée uniquement de chevrons. Après le montage d'éléments de toitures de ce type, ils sont généralement encore munis de lattes pour tuiles, qui supportent à leur tour les tuiles ou une autre couverture. Dans une construction de ce type, l'élément de toiture joue le rôle d'une sous-toiture isolée traditionnelle. Il est également possible pour la plaque de base précitée de former le recouvrement interne de la toiture en question ou bien de munir la plaque de base de recouvrement interne de ce type. Habituellement, des éléments de toitures de ce type sont préfabriqués à mesure pour une habitation.

Les éléments de construction ou les panneaux de construction connue sont principalement de deux types. Il s'agit d'une part de ce que l'on appelle un élément de construction de type caisson découvert, par lequel une plaque de base est appliquée uniquement sur un côté plat de l'élément de construction ou du panneau de construction, l'autre côté plat, plus précisément le côté ouvert, étant formé principalement par la matière isolante, de sorte qu'aucun élément de structure de l'élément de construction ou du panneau de construction ne se trouve au-dessus de la matière isolante, et d'autre part de ce que l'on appelle un élément de construction du type en sandwich par lequel une plaque de recouvrement est appliquée sur le deuxième côté plat, si bien que la matière isolante se trouve dans l'espace ménagé entre la plaque de base et la plaque de recouvrement. Pour des exemples d'éléments de toitures de type caisson découvert et d'éléments de toitures du type en sandwich, on peut se référer au document EP 0 978 601 et au document EP 1 162 050.
DE 298228220 U décrit un élément de construction de type caisson découvert selon le préambule de la revendication 1.

Pour des éléments de construction de type caisson découvert, on utilise principalement ce qu'on appelle des matières isolantes dures telles que du polyuréthane. Avec le polyuréthane, on peut obtenir une finition étanche à l'eau sur le côté ouvert de l'élément de toiture. Le polyuréthane ou d'autres mousses isolantes offrent une très bonne isolation thermique et confèrent à l'élément de construction une rigidité structurelle supplémentaire. En outre, on peut marcher sur des mousses isolantes dures, ce qui rend le polyuréthane très pratique à l'usage comme matière isolante, plus spécifiquement lors du montage de l'élément de construction concerné. Dans le cas d'éléments de construction du type en sandwich, on peut appliquer ce que l'on appelle des matières isolantes souples telles que de la laine minérale ou des matières isolantes à base de produits animaux, comme de la laine de mouton. En l'occurrence, la finition étanche à l'eau, la rigidité structurelle et la capacité de le franchir, que manifeste l'élément de construction, sont fournis à titre principal par la plaque de recouvrement précitée.

L'application de laine minérale, par exemple de la laine de roche ou de la laine de verre, offre l'avantage que ces matières isolantes peuvent posséder des propriétés ignifuges et/ou d'insonorisation. Contrairement à des matières isolantes dures, tels que du polyuréthane et d'autres mousses isolantes, on peut difficilement voire pas du tout marcher sur les matières isolantes tendres telles que des produits à base de laine ; il est difficile de prévoir des évidements et des alésages dans des matières isolantes tendres telles que des produits à base de laine et ces matières nécessitent la plupart du temps une étanchéité à l'eau séparée, par exemple sous la forme d'une plaque de recouvrement ou d'une membrane imperméable à l'eau et/ou antibuée.

Il est à remarquer que des évidements et des alésages peuvent s'avérer par exemple utiles pour le passage de tuyaux d'évacuation ou de cheminées.

Il est en outre à remarquer qu'avec une matière isolante telle que de la laine minérale ou d'autres produits à base de laine, on a besoin normalement, pour une isolation thermique identique, d'une épaisseur d'isolation supérieure qu'avec par exemple du polyuréthane. Des éléments en sandwich qui sont munis d'une matière isolante de ce type peuvent s'avérer très épais.

La présente invention concerne en premier lieu un élément de construction ou un panneau de construction alternative qui, conformément à différentes formes de réalisation préférées de l'invention, fournit des avantages vis-à-vis des éléments de construction faisant partie de l'état de la technique. À cet effet, l'invention concerne, conformément à son premier aspect, un élément de construction, selon la revendication 1.De préférence, la mousse isolante définie dans la revendication 1 est une mousse isolante dure (en anglais : rigid foam).

Les nervures précitées peuvent contribuer dans une mesure importante à la rigidité structurelle de l'élément de construction en question.

Grâce à la structure stratifiée de la matière isolante, on dispose, grâce à la présente invention, de toute une série de nouvelles possibilités pour ajuster la matière isolante de l'élément de construction au degré désiré d'une inflammabilité, d'imperméabilité à l'eau, de rigidité structurelle, d'ouverture à la marche, d'aptitude au traitement lors de la formation des évidements ou des alésages, d'isolation acoustique et/ou d'isolation thermique. Ces nouvelles possibilités sont mises en oeuvre dans le cas d'éléments de construction de type caisson découvert.

Conformément à une première forme de réalisation importante, la première couche précitée est réalisée de préférence à partir d'une mousse isolante qui est appliquée sous forme liquide sur l'élément de construction pour y être ensuite durcie. Par le fait que la première couche précitée est réalisée à partir d'une substance liquide durcie et même, de préférence, est constituée à titre principal ou complètement d'une substance de ce type, on peut obtenir en soi toute une série de nouveaux effets. C'est ainsi que par exemple on peut obtenir une adaptation optimale de la forme de cette couche pour qu'elle épouse parfaitement l'espace disponible entre les nervures, ce qui peut donner lieu, à titre préférentiel, à la formation d'une couche étanche à l'eau au-dessus de la plaque de base. L'adaptation de formes précitées peut également contribuer à la rigidité structurelle ou à la stabilité de forme de l'élément de construction. Via le durcissement on peut également obtenir par exemple la fixation des autres couches de la matière isolante. Une substance liquide durcie de ce type offre également la possibilité de mettre en oeuvre un transfert de chaleur de meilleure qualité en direction des couches isolantes limitrophes.

De préférence, pour la première couche précitée, on choisit une mousse isolante parmi le groupe comprenant le polyuréthane, le polyisocyanurate, du polystyrène extrudé, du polystyrène expansé et une isolation phénolique. Comme on l'a déjà indiqué ci-dessus, on peut obtenir entre autres avec le polyuréthane sans difficulté un effet d'étanchéité de ce type. Il est à remarquer que les mousses isolantes mentionnées en l'occurrence sont bien connues comme matières isolantes dures. D'autres possibilités pour la matière isolante de la première couche concernent des mousses isolantes à base de perlite, de vermiculite ou de mousse de verre, qui font également partie des matières isolantes dures.

Conformément à l'invention, la deuxième couche précitée est constituée principalement d'une matière différente de celle de la première couche précitée. Il est clair que de cette manière on peut obtenir une adaptation maximale des propriétés de l'élément de construction à ce que l'on souhaite. La différence précitée réside de préférence dans le fait que la deuxième couche précitée est constituée principalement d'une matière isolante qui n'est pas une mousse isolante ou mieux encore dans le fait que la deuxième couche précitée est exempte de mousse isolante.

De préférence, la deuxième couche précitée est réalisée à partir d'une matière isolante qui est constituée d'un produit fibreux, d'un produit à base de laine ou d'un produit d'isolation à base de produits animaux. La matière isolante en question peut représenter par exemple un produit à base de cellulose. La matière isolante en question peut être choisie parmi le groupe comprenant de la laine minérale telle que la laine de verre ou la laine de roche, la laine de bois, la laine de lin, la laine de mouton et des plumes telles que des plumes de canard ou analogues. Il est clair que, lorsqu'on fait le choix par exemple de la laine minérale, on peut obtenir un effet ignifuge significatif et que, lorsqu'on préfère se tourner vers un produit animal, on peut constituer un élément de construction très écologique. Il convient d'indiquer qu'en ce qui concerne les produits d'isolation mentionnés en l'occurrence pour la deuxième couche, on choisit une matière isolante plutôt tendre, ou à tout le moins une matière qui est plus douce que le polyuréthane.

La combinaison d'une première couche qui est constituée d'une matière isolante dure et d'une deuxième couche qui est constituée par une matière isolante tendre, constitue en soi une idée inventive indépendante de la présente invention, étant donné qu'une combinaison de ce type est en mesure de fournir en soi des avantages particuliers. C'est ainsi qu'il est par exemple intéressant de disposer sur le côté ouvert d'un élément de toiture de type caisson découvert, d'une matière isolante dure de telle sorte que ce côté, lors du montage de la toiture, offre une meilleure résistance contre la dégradation, et étant donné que l'on peut éventuellement y marcher. Une matière isolante dure confère en même temps une certaine résistance à la déformation ou une certaine rigidité structurelle à l'élément de toiture.

Selon l'invention, la première couche précitée est séparée de la plaque de base précitée, au moins par la deuxième couche précitée. Dans cette structure, la première couche peut éventuellement être mise en oeuvre pour libérer de l'eau aussi bien la deuxième couche que la plaque de base et la première couche peuvent éventuellement mettre en oeuvre la fixation de la deuxième couche à des couches sous-jacentes et/ou à la plaque de base.

De préférence, on ne prévoit aucune matière isolante notable entre la première couche précitée et la deuxième couche précitée et de préférence on ne prévoit aucune matière isolante notable entre la deuxième couche précitée et la plaque de base précitée. Du point de vue de l'isolation thermique, il est préférable de limiter le nombre de transitions entre des matières isolantes. De préférence, la matière isolante précitée est également réalisée principalement via deux couches séparées précitées qui, dans ce cas-ci, sont disposées de préférence directement l'une par-dessus l'autre.

Dans la forme de réalisation de loin préférée de la présente invention, selon son premier aspect, la première couche précitée forme une surface externe de l'élément de base ou, à tout le moins, la couche isolante située le plus près de cette surface externe. Le cas échéant, comme il est bien connu en soi, on peut appliquer une membrane ou une feuille, un revêtement et/ou une impression en l'absence de propriétés d'isolation thermique notables sur la couche isolante la plus externe. Dans cette structure, la première couche peut former une couche de protection pour toutes les matières isolantes sous-jacentes et pour la plaque de base. Il est clair que l'élément de construction de cette forme de réalisation préférée concerne un élément de construction de type caisson découvert. Dans le cas d'une toiture, le côté ouvert de l'élément de construction est orienté de préférence vers le côté externe de la toiture. Il va de soi que l'on travaille de préférence avec une première couche qui a un effet d'imperméabilité à l'eau et/ou sur laquelle on peut marcher, comme par exemple avec une première couche qui comprend du polyuréthane. Pour la deuxième couche, on peut travailler avec de la laine minérale, pour pouvoir obtenir du côté interne de la toiture, des propriétés ignifuges et/ou d'isolation acoustique. On signalera que, grâce à l'utilisation d'une couche isolante procurant une étanchéité à l'eau sur le côté ouvert de l'élément de type caisson découvert, on rend possible l'utilisation de laine minérale pour une des couches situées plus à l'intérieur, par exemple pour la couche la plus interne ou la deuxième couche, si bien que l'on peut obtenir un élément de toiture possédant, entre autres, aussi bien le caractère ignifuge précité que l'étanchéité à l'eau précitée.

Il est clair que, conformément à une autre forme de réalisation, d'autres couches isolantes peuvent être présentes au-dessus de la première couche précitée, c'est-à-dire plus près de la surface externe précitée. C'est ainsi que l'on peut travailler par exemple avec une plaque isolante ou avec une plaque de recouvrement qui vient s'appliquer par-dessus la première couche précitée, par exemple en venant s'appliquer également entre les nervures précitées, ou bien qui est réalisée sous la forme d'une plaque de recouvrement et qui vient par conséquent se fixer par-dessus les nervures en question. Le cas échéant, on peut prévoir un vide à air entre la première couche précitée et la plaque isolante précitée.

La première couche précitée peut être relativement mince. De préférence, aussi bien la première couche que la deuxième couche présente néanmoins une épaisseur d'au moins 2 cm. En fonction des propriétés souhaitées, la première couche peut être réalisée pour être plus épaisse que l'autre couche. Ainsi, par exemple, la deuxième couche précitée peut être réalisée pour être plus épaisse que la première couche précitée. Dès que l'on obtient la propriété désirée telle que l'étanchéité ou la fixation ou l'isolation thermique, par la présence de la première couche, l'espace restant dans l'élément de construction peut être utilisé par une autre matière isolante, par conséquent de préférence principalement par la matière isolante de la deuxième couche précitée.

Il est clair que l'élément de construction de l'invention représente de préférence un élément de toiture ou un panneau de toiture de type caisson découvert. Toutefois, il n'est pas exclu de mettre en oeuvre l'invention dans le cadre des éléments de murs ou de sols.

De préférence, l'élément de construction de l'invention est de type autoportant. Par ce terme on veut dire que des éléments de construction de ce type peuvent former une construction autoportante ou en d'autres termes qu'une construction de ce type est en mesure de supporter son propre poids. Cette propriété peut donner lieu à des constructions très simples.

La présente invention concerne en outre un procédé qui permet de réaliser des éléments de construction procurant une isolation thermique, tels que des segments de construction ou les panneaux de construction du premier aspect, d'une manière rapide et/ou économique. À cet effet, la présente invention concerne, conformément à un deuxième aspect indépendant, un procédé pour la réalisation d'éléments de construction, selon la revendication 14.

Il est clair que les deux étapes séparées définies par la revendication 14 sont mises en oeuvre de préférence à la suite l'une de l'autre, et qu'elles peuvent le cas échéant être mises en oeuvre directement l'une après l'autre. Il n'est pas non plus exclu de faire en sorte que le procédé comprenne encore au moins des étapes qui sont mises en oeuvre entre les deux étapes séparées précitées.

Selon l'invention, afin d'appliquer la mousse isolante précitée, on met en oeuvre une technique par laquelle la matière isolante concernée est appliquée sous forme liquide sur l'élément de construction. De préférence, dans l'autre étape parmi les deux étapes séparées précitées, on met en oeuvre une autre technique, de préférence une technique par laquelle on applique la matière isolante concernée par voie sèche. De préférence, on applique une couche de matière isolante à l'aide de cette technique par voie sèche avant d'appliquer une couche de matière isolante sous forme liquide. Un procédé de ce type offre l'avantage que l'on peut obtenir aisément une matière isolante possédant une forme adaptée qui déploie éventuellement un effet d'étanchéité à l'eau.

Le procédé du deuxième aspect est mis en oeuvre pour la formation des éléments de construction du premier aspect ou bien pour la réalisation de leurs formes de réalisation préférées. Dans chacune des étapes séparées précitées du procédé en question, on applique une couche de matière isolante, la couche de mousse isolante que l'on applique formant alors la première couche précitée et l'autre couche y formant la deuxième couche de matière isolante précitée.

Il est clair que l'invention concerne également des éléments de construction, en particulier des éléments de toiture de type caisson découvert que l'on obtient ou que l'on peut obtenir conformément à un procédé possédant les caractéristiques du deuxième aspect précité.

Dans le but de mieux indiquer les caractéristiques de l'invention, on décrit ci-après, à titre d'exemple et sans aucun caractère limitatif, un certain nombre de formes de réalisation préférées, en se référant aux dessins annexés dans lesquels :
la figure 1 représente un élément de construction selon invention ;
la figure 2 représente une application possible de l'élément de construction de la figure 1 ; et
la figure 3 représente de manière schématique un certain nombre d'étapes d'un procédé selon l'invention.

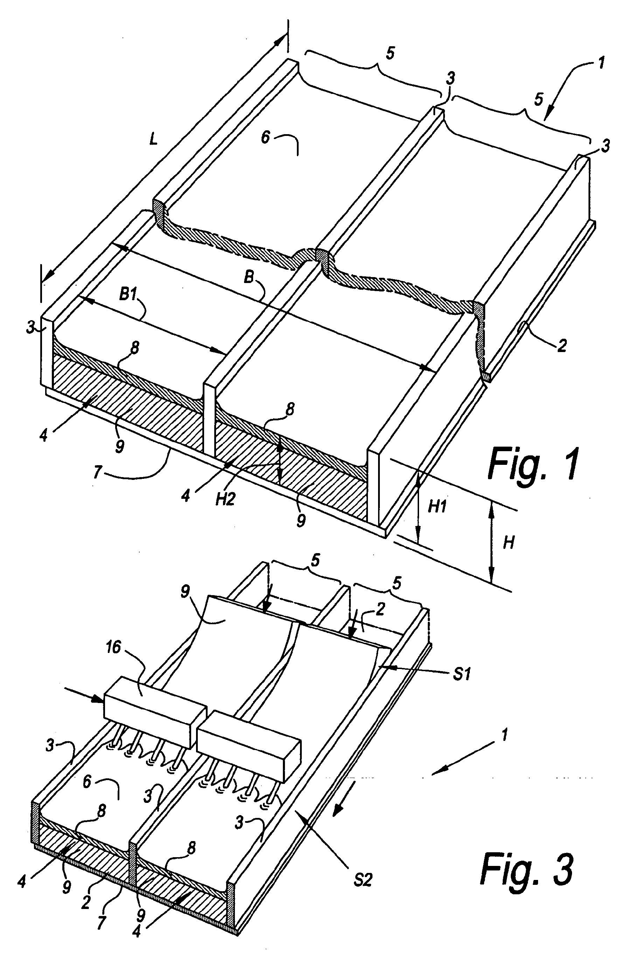

En figure 1, on représente un élément de construction 1, plus spécifiquement un élément de toiture ou un panneau de toiture, possédant les caractéristiques du premier aspect de la présente invention.

L'élément de toiture de la figure 1 comprend une plaque de base 2 comportant des nervures 3, une matière isolante 4 étant disposée entre ces nervures 3. Dans le cas représenté, on forme, via les nervures 3, deux compartiments 5 sur la plaque de base 2, qui sont munis tous deux de la matière isolante précitée 4. Il est clair que l'on peut également travailler avec un seul compartiment 5 ou bien avec trois compartiments 5 ou plus qui comprennent la matière isolante 4. En outre, il est clair que la matière isolante 4 des différents compartiments 5 possède de préférence une constitution analogue.

L'élément de construction 1 de la figure 1 concerne un élément de toiture de type caisson découvert. En l'occurrence, le côté plat 6 de l'élément de toiture, qui vient se disposer contre la plaque de base précitée 2, est réalisé pour être ouvert, ce côté ouvert 6 étant formé principalement par la matière isolante précitée 4. Par le terme « ouvert » on veut dire que, sur le côté concerné 6, au-dessus de la matière isolante 4, on ne trouve aucun élément de structure de l'élément de toiture. Bien entendu, il est possible de recouvrir la matière isolante 4 du côté ouvert 6 par une membrane, par une feuille, par une impression ou analogue. Une couche de recouvrement de ce type est de préférence imperméable à l'eau et/ou de type antibuée.

Il est à noter que l'élément de toiture de la figure 1 est représenté à l'état raccourci et que la longueur L de l'élément de toiture dans la pratique peut représenter plusieurs fois sa largeur B. La longueur L peut être prévue à la mesure de la toiture et s'élève de préférence entre 2 et 8 m, tandis que la largeur B de l'élément 1 dépend du nombre de compartiments 5 que présente l'élément de toiture, la largeur B1 d'un seul compartiment 5 étant de préférence située entre 35 et 60 cm, une largeur B1 d'environ 40 cm représentant une valeur correcte. La hauteur H d'un élément de toiture dépend de la hauteur H1 des nervures précitées 3 et peut en l'occurrence être choisie de préférence entre 7 et 20 cm. La hauteur totale correspondante H2 de la matière isolante 4 est de préférence inférieure à la hauteur H1 des nervures précitées 3 et peut en l'occurrence être choisie de préférence d'une manière correspondant à la hauteur H1 des nervures 3, entre 6 et 18 cm.

La plaque de base précitée 2 peut être choisie parmi le groupe comprenant une plaque en copeaux de bois, une plaque de gypse renforcé par du carton, une plaque de gypse renforcé par des fibres, une plaque multiplex, une plaque OSB (Oriented Strand Board) et une plaque de silicate. Une plaque de base 2 de ce type peut être munie, sur son côté 7 orienté vers l'extérieur, c'est-à-dire vers l'intérieur de la toiture, de couches de finition, comme par exemple une ou plusieurs couches de peinture, une ou plusieurs couches stratifiées ou encore des frisettes qui y sont fixées. La plaque de base 2 peut posséder en soi également des propriétés ignifuges et/ou hydrofuges. La façon d'obtenir des propriétés de ce type dans le cas des matériaux de plaque de base mentionnés en l'occurrence font partie des connaissances en soi de l'homme de métier. En général, on part du principe qu'une plaque de base de ce type et en particulier une plaque en copeaux de bois ne possède aucune ou pratiquement aucune propriété d'isolation thermique ; toutefois, il n'est pas exclu que l'on puisse travailler avec des plaques de base qui offrent une isolation thermique importante.

Les nervures précitées 3 ou les chevrons sont constitués de préférence de bois tel que du bois de sapin ou du pitchpin et s'étendent de préférence sur toute la longueur de l'élément de toiture. De préférence, chaque nervure est constituée, en direction longitudinale, d'une seule pièce et présente de préférence une épaisseur de 20 à 45 mm. À la place d'une seule pièce, une ou plusieurs des nervures précitées peuvent être composées, sur leur longueur, de plusieurs éléments, par exemple par des nervures plus courtes qui doivent être fixées l'une à l'autre. Une fixation de ce type peut être réalisée par ce que l'on appelle « aboutage ». Pour obtenir un exemple d'une technique de ce type, on se réfère au document déjà mentionné EP 1 162 050. Il est à noter que la plaque de base peut également être constituée par des éléments soudés les uns aux autres.

La particularité des éléments de toiture qui présentent les caractéristiques de l'invention réside dans le fait que la matière isolante précitée 4 est constituée par au moins deux couches 8-9. Dans ce cas, la matière isolante 4 est constituée exactement par deux couches 8-9, plus précisément une première couche 8 et par une deuxième couche 9, ces deux couches 8-9 étant constituées par une matière différente. La première couche 8, qui se trouve sur le côté ouvert 6 de l'élément de toiture, est formé par une mousse isolante qui est appliquée sous une forme liquide sur l'élément de construction 1, pour y être durcie. Il peut s'agir par exemple d'une mousse de polyuréthane qui, comme il est bien connu en soi, peut être obtenue à l'aide d'une réaction entre deux composants. La deuxième couche 9, qui vient se disposer entre la première couche précitée 8 la plaque de base 2, est formée à partir d'une autre matière. Dans le cas présent, il s'agit d'une deuxième couche 9 constituée de laine minérale.

Via l'élément de toiture de type caisson découvert représenté en l'occurrence, on peut obtenir une bonne propriété ignifuge et une bonne isolation acoustique, grâce à la présence de la deuxième couche précitée 9, tandis que l'on peut obtenir un effet isolant de fermeture grâce à la première couche précitée 8. Comme on le représente clairement en l'occurrence, on peut obtenir, avec une première couche 8 que l'on obtient à partir d'une substance liquide durcie, un bon raccord entre les nervures 3 ou entre les chevrons. Un raccord de ce type peut procurer une bonne fermeture imperméable à l'eau. Grâce à l'application sous forme liquide de la mousse isolante ou de ses composants et par le fait qu'on la laisse ou qu'on les laisse durcir, réagir ou se transformer en mousse sur l'élément de construction lui-même, il est possible de faire en sorte, comme on le représente en l'occurrence, que cette mousse isolante forme un bord vertical contre les nervures 3, qui favorise l'effet d'imperméabilité à l'eau manifesté par la matière isolante.

L'élément de construction représenté en l'occurrence, plus spécifiquement l'élément de toiture, est ouvert à la marche par le fait que la première couche précitée 8 est constituée d'une mousse d'isolation dure, telle que du polyuréthane. En outre, la matière isolante 4 de la première couche 8 contribue à la résistance à la déformation ou à la rigidité structurelle de l'élément de toiture de type caisson découvert que l'on représente en l'occurrence. En particulier, la première couche 8 contribue à la résistance à la flexion et à la torsion qui manifeste l'élément de toiture.

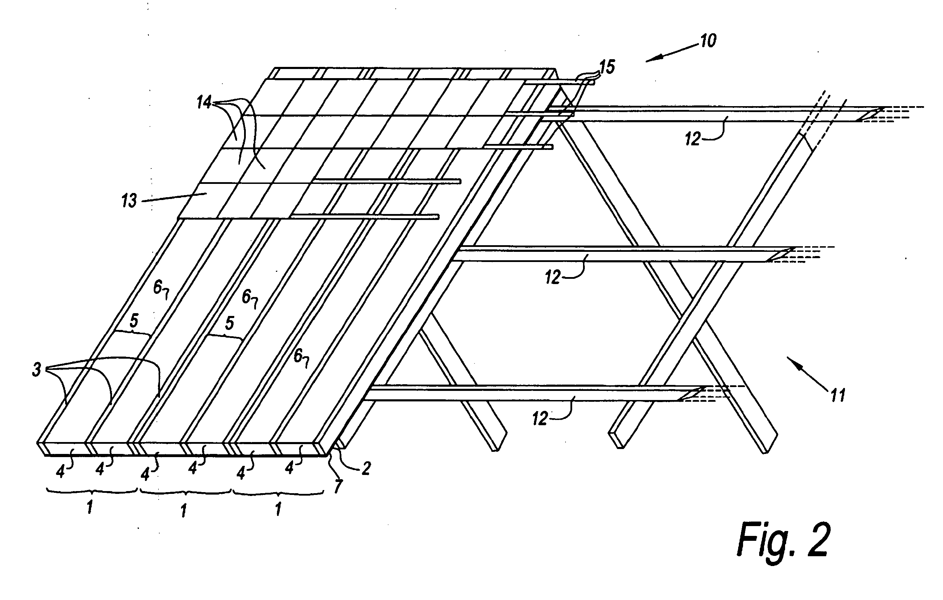

En figure 2, on représente la façon dont on peut insérer l'élément de toiture de la figure 1 dans une toiture 10. En l'occurrence, on peut partir d'une toiture relativement simple 11, comme représenté, en travaillant avec un nombre limité de chevrons 12 sur lesquels les éléments de toiture sont fixés à l'aide de moyens de fixation mécaniques tels que des clous et/ou des crochets. On peut également prévoir en outre des joints éventuels entre les différents éléments de toiture, par exemple en les remplissant avec une matière isolante telle qu'une mousse de polyuréthane.

Comme représenté, la toiture ultérieure 13 peut alors être appliquée sur ces éléments de toiture. Par exemple, comme représenté en l'occurrence, on applique des tuiles 14, après avoir prévu au préalable des lattes pour tuiles 15.

En figure 3, on illustre un procédé muni des caractéristiques du deuxième aspect de l'invention. Dans l'exemple de la figure, on met en oeuvre un procédé de ce type pour la réalisation de l'élément de toiture de la figure 1.

Comme représenté, on part d'une plaque de base 2 qui est munie des nervures précitées 3. Dans les compartiments 5 disposés entre ces nervures 3, on introduit, par voie sèche, dans une première étape S1, une couche 9 de matière isolante 4. C'est ainsi que l'on peut insérer par exemple une couche 9 de laine minérale, éventuellement à partir d'un rouleau, dans le compartiment 5 en question. Dans une deuxième étape successive S2, on applique une couche 8 de mousse isolante en utilisant une technique par laquelle on dispose de la matière isolante concernée 4 sous forme liquide dans les compartiments 5. C'est ainsi que par exemple, comme indiqué ici, on peut introduire une mousse de polyuréthane. En l'occurrence, on peut faire usage d'un système d'application 16 connu en soi pour des substances visqueuses de ce type, comme par exemple le système d'application qui a été décrit dans le document WO 2008/018787.

L'invention n'exclut pas le fait de prévoir, dans des étapes précédentes, intermédiaires ou suivantes, encore d'autres couches de matière isolante 4 sur l'élément de construction 1 ou sur l'élément de toiture. De préférence, le côté ouvert 6 de l'élément de toiture est muni, à titre de finition, d'une membrane, d'une feuille ou d'un recouvrement qui ne doit pas nécessairement posséder des propriétés notables d'isolation thermique. L'application de couches de recouvrement de ce type n'est pas illustrée en l'occurrence.

Ces couches de recouvrement et de finition ne sont pas des éléments de structure de l'élément de construction.

Il est à noter que les nervures précitées 3 ne doivent pas nécessairement être appliquées sur la plaque de base 2 avant l'application de la matière isolante 4 sur la plaque de base 2, étant donné qu'il est toujours possible de prévoir des évidements dans ou entre la matière isolante 4, dans lequel les nervures 3 peuvent être fixées par la suite. C'est ainsi que l'on peut mettre en oeuvre par exemple une technique analogue à la technique connue d'après le document EP 0 978 601.

Il est également à noter que le procédé de l'invention peut être mis en oeuvre aussi bien en mouvement ou à l'arrêt. Par là, on veut dire que l'élément de construction en question 1 ou le panneau de construction, lors de sa réalisation peut être mis en mouvement ou non par rapport aux installations utilisées lors de cette réalisation, et également par rapport au système d'application 16 précité par lequel, comme indiqué dans l'exemple, la matière isolante 4 de la première couche 8 est introduite sous forme liquide.

La présente invention n'est en aucune façon limitée aux formes de réalisation qui ont été décrites ci-dessus ; des éléments de construction de ce type et des procédés de ce type peuvent être mis en oeuvre conformément à différentes variantes, sans sortir du cadre de la présente invention, qui est défini par les revendications.

## Revendications

1. Élément de construction de type caisson découvert, plus spécifiquement pour des constructions de toitures, de murs ou de sols, ledit élément de construction (1) comprenant au moins une plaque de base (2) qui est munie de nervures (3) et une matière isolante (4) étant disposée entre les nervures précitées (3), la plaque de base (2) étant appliquée uniquement sur un côté plat de l'élément de construction, l'autre côte plat, le côté ouvert, étant formé principalement par la matière isolante (4), de sorte qu' aucun élément de structure de l'élément de construction ne se trouve au-dessus de la matière isolante (4), la matiere isolante précitée (4) étant constituée par au moins une première couche (8) et une deuxième couche (9) de matière différente, **caractérisée en ce que** la première couche précitée (8) est réalisée à partir d'une mousse isolante qui est appliquée sous forme liquide sur l'élément de construction (1) et y est durcie, et **en ce que** la première couche précitée (8) est séparée de la plaque de base précitée (2) au moins par la deuxième couche précitée (9).

2. Élément de construction selon la revendication 1, **caractérisé en ce qu'**on choisit, pour la première couche précitée (8), une mousse isolante parmi le groupe comprenant du polyuréthane, du polyisocyanurate, du polystyrène extrudé, du polystyrène expansé et une Isolation phénolique.

3. Élément de construction selon la revendication 1 ou 2, **caractérisé en ce que** la deuxième couche précitée (9) est réalisée à partir d'une matière isolante (4) qui est constituée d'une matière fibreuse ou d'un produit à base de laine.

4. Élément de construction selon l'une quelconque des revendications précédentes, **caractérisé par** l'absence de matières isolantes notables (4) entre la première couche précitée (8) et la deuxième couche précitée (9).

5. Élément de construction selon l'une quelconque des revendications précédentes, **caractérisé par** l'absence de matières isolantes notables (4) entre la deuxième couche précitée (9) et la plaque de base précitée (2).

6. élément de construction selon l'une quelconque des revendications précédentes, **caractérisé en ce que** la première couche précitée (6) forme la couche d'isolation située le plus à l'extérieur de l'élément de construction (1).

7. Élément de construction selon l'une quelconque des revendications précédentes, **caractérisé en ce que** la matière isolante précitée (4) est réalisée principalement par les deux couches séparées précitées (8-9).

8. Élément de construction selon l'une quelconque des revendications précédentes, **caractérisé en ce que**, aussi bien la première couche (8) que la deuxième couche (9) présentent au moins une épaisseur de 2 cm.

9. Élément de construction selon l'une quelconque des revendications précédentes, **caractérisé en ce que**, la hauteur totale (H2) de la matière isolante (4) est inférieure à la hauteur (H1) des nervures (3) précitées.

10. Élément de construction selon l'une quelconque des revendications précédentes, **caractérisé en ce que**, la plaque de base est choisi parmi le groupe comprenant une plaque en coupeaux de bols, une plaque multiplex et une plaque OSB.

11. Élément de construction selon l'une quelconque des revendications précédentes, **caractérisé en ce que**, la plaque de base est munie sur son côté orienté vers l'extérieur d'une couche de finition.

12. Élément de construction selon l'une quelconque des revendications précédentes, **caractérisé en ce que**, la mousse isolante forme un bord vertical contre les nervures (3), qui favorise l'effet d'imperméabilité à l'eau manifesté par la matière isolante.

13. Élément de construction selon l'une quelconque des revendications précédentes, **caractérisé en ce que**, le côté ouvert (6) de l'élément est muni, à titre de finition, d'une membrane, d'une feuille ou d'un recouvrement sans propriétés notables d'isolation thermique.

14. Procédé pour la réalisation d'éléments de construction, qui est mls en oeuvre pour la formation d'un élément de construction (1) possédant les caractéristiques selon l'une quelconque des revendication précédentes, **caractérisé en ce qu'**on applique la matière isolante précitée (4) en au moins deux étapes séparées (S1-S2) sur la plaque de base (1), la mousse isolante étant appliquée dans au moins une des étapes précitées (S1) en mettant en oeuvre une technique par laquelle la matière isolante concernée (4) est appliquée sous forme liquide.

## Patentansprüche

1. Konstruktionselement von der Art offener Kasten, spezieller für Bedachungs-, Mauer- oder Bodenkonstruktionen, wobei das Konstruktionselement (1) mindestens eine mit Rippen (3) versehene Grundplatte (2) enthält und ein Isolierstoff (4) zwischen den Rippen (3) angeordnet ist, wobei die Grundplatte (2) nur auf einer flachen Seite des Konstruktionselements angebracht ist, während die andere flache Seite, die offene Seite, hauptsächlich vom Isolierstoff (4) gebildet wird, so dass kein Strukturelement des Konstruktionselements sich oberhalb des Isolierstoffs (4) befindet, wobei der Isolierstoff (4) aus mindestens einer ersten Schicht (8) und einer zweiten Schicht (9) aus unterschiedlichem Material besteht, **dadurch gekennzeichnet, dass** die erste Schicht (8) ausgehend von einem Isolierschaum hergestellt wird, der in flüssiger Form auf das Konstruktionselement (1) aufgebracht und dort gehärtet wird, und dass die erste Schicht (8) von der Grundplatte (2) mindestens durch die zweite Schicht (9) getrennt ist.

2. Konstruktionselement nach Anspruch 1, **dadurch gekennzeichnet, dass** für die erste Schicht (8) ein Isolierschaum aus der Gruppe ausgewählt wird, die Polyurethan, Polyisocyanurat, extrudiertes Polystyrol, expandiertes Polystyrol und eine Phenolisolierung enthält.

3. Konstruktionselement nach Anspruch 1 oder 2, **dadurch gekennzeichnet, dass** die zweite Schicht (9) ausgehend von einem Isolierstoff (4) hergestellt wird, der aus einem Fasermaterial oder aus einem Produkt auf der Basis von Wolle besteht.

4. Konstruktionselement nach einem der vorhergehenden Ansprüche, **gekennzeichnet durch** die Abwesenheit von bemerkenswerten Isolierstoffen (4) zwischen der ersten Schicht (8) und der zweiten Schicht (9).

5. Konstruktionselement nach einem der vorhergehenden Ansprüche, **gekennzeichnet durch** die Abwesenheit von bemerkenswerten Isolierstoffen (4) zwischen der zweiten Schicht (9) und der Grundplatte (2).

6. Konstruktionselement nach einem der vorhergehenden Ansprüche, **dadurch gekennzeichnet, dass** die erste Schicht (8) die Isolierschicht bildet, die sich am weitesten außerhalb des Konstruktionselements (1) befindet.

7. Konstruktionselement nach einem der vorhergehenden Ansprüche, **dadurch gekennzeichnet, dass** der Isolierstoff (4) hauptsächlich von den zwei getrennten Schichten (8-9) gebildet wird.

8. Konstruktionselement nach einem der vorhergehenden Ansprüche, **dadurch gekennzeichnet, dass** sowohl die erste Schicht (8) als auch die zweite Schicht (9) mindestens eine Dicke von 2 cm haben.

9. Konstruktionselement nach einem der vorhergehenden Ansprüche, **dadurch gekennzeichnet, dass** die Gesamthöhe (H2) des Isolierstoffs (4) geringer als die Höhe (H1) der Rippen (3) ist.

10. Konstruktionselement nach einem der vorhergehenden Ansprüche, **dadurch gekennzeichnet, dass** die Grundplatte aus der Gruppe ausgewählt wird, die eine Holzspanplatte, eine Multiplexplatte und eine OSB-Platte enthält.

11. Konstruktionselement nach einem der vorhergehenden Ansprüche, **dadurch gekennzeichnet, dass** die Grundplatte auf ihrer nach außen gerichteten Seite mit einer Deckschicht versehen ist.

12. Konstruktionselement nach einem der vorhergehenden Ansprüche, **dadurch gekennzeichnet, dass** der Isolierschaum einen senkrechten Rand gegen die Rippen (3) bildet, der die beim Isolierstoff manifeste Wasserundurchlässigkeitswirkung begünstigt.

13. Konstruktionselement nach einem der vorhergehenden Ansprüche, **dadurch gekennzeichnet, dass** die offene Seite (6) des Elements als Abschluss mit einer Membran, einer Folie oder einer Abdeckung ohne bemerkenswerte Wärmedämmungseigenschaften versehen ist.

14. Verfahren zur Herstellung von Konstruktionselementen, das zur Bildung eines Konstruktionselements (1) durchgeführt wird, das die Merkmale nach einem der vorhergehenden Ansprüche aufweist, **dadurch gekennzeichnet, dass** der Isolierstoff (4) in mindestens zwei getrennten Schritten (S1-S2) auf die Grundplatte (1) aufgebracht wird, wobei der Isolierschaum in mindestens einem der Schritte (S1) aufgebracht wird, indem eine Technik angewendet wird, durch die der betreffende Isolierstoff (4) in flüssiger Form aufgebracht wird.

## Claims

1. Construction element of open box-section type, more specifically for constructing roofing, walls or floors, the said construction element (1) comprising at least one base sheet (2) which is provided with ribs (3) and an insulating material (4) being arranged between the aforementioned ribs (3), the base sheet (2) being applied only to one flat side of the construction element, the other flat side, the open side, being formed mainly by the insulating material (4), so that no structural element of the construction element is situated above the insulating material (4), the aforementioned insulating material (4) being made up of at least one first layer (8) and one second layer (9) of a different material, **characterized in that** the aforementioned first layer (8) is made from an insulating foam which is applied in liquid form to the construction element (1) and hardened thereon, and **in that** the aforementioned first layer (8) is separated from the aforementioned base sheet (2) at least by the aforementioned second layer (9).

2. Construction element according to Claim 1, **characterized in that** the choice made for the aforementioned first layer (8) is an insulating foam from the group comprising polyurethane, polyisocyanurate, extruded polystyrene, expanded polystyrene and phenolic insulation.

3. Construction element according to Claim 1 or 2, **characterized in that** the aforementioned second layer (9) is made of an insulating material (4) which is made up of a fibrous material or of a wool-based product.

4. Construction element according to any one of the preceding claims, **characterized by** the absence of notable insulating materials (4) between the aforementioned first layer (8) and the aforementioned second layer (9).

5. Construction element according to any one of the preceding claims, **characterized by** the absence of notable. insulating materials (4) between the aforementioned second layer (9) and the aforementioned base sheet (2).

6. Construction element according to any one of the preceding claims, **characterized in that** the aforementioned first layer (8) forms the insulation layer situated furthest towards the outside of the construction element (1).

7. Construction element according to any one of the preceding claims, **characterized in that** the aforementioned insulating material (4) is made mainly of the aforementioned two separate layers (8-9).

8. Construction element according to any one of the preceding claims, **characterized in that** both the first layer (8) and the second layer (9) have at least a thickness of 2 cm.

9. Construction element according to any one of the preceding claims, **characterized in that** the total height (H2) of the insulating material (4) is less than the height (H1) of the aforementioned ribs (3).

10. Construction element according to any one of the preceding claims, **characterized in that** the base sheet is chosen from the group comprising a sheet of wood chipboard, a sheet of multiplex board and a sheet of OSB.

11. Construction element according to any one of the preceding claims, **characterized in that** the base sheet is provided with a finished layer on its outwardly-facing side.

12. Construction element according to any one of the preceding claims, **characterized in that** the insulating foam forms a vertical edge against the ribs (3), promoting the imperviousness to water displayed by the insulating material.

13. Construction element according to any one of the preceding claims, **characterized in that** the open side (6) of the element is equipped, by way of finish, with a membrane, a thin sheet or a cover that has no notable thermal insulation properties.

14. Method for producing construction elements, which is implemented in order to form a construction element (1) having the features according to any one of the preceding claims, **characterized in that** the aforementioned insulating material (4) is applied to the base sheet (1) in at least two separate steps (S1-S2), the insulating foam being applied in at least one of the aforementioned steps (S1) by employing a technique whereby the insulating material (4) concerned is applied in liquid form.
